# EUROPEAN PATENT APPLICATION

(11) **EP 3 211 786 A1**
(43) Date of publication of application: **30.08.2017**
(21) Application number: 15853297.8
(22) Date of filing: 10.04.2015
(51) Int. Cl.: H02P 6/08

(54) **CONSTANT POWER AND DOUBLE SPEED CONTROL SYSTEM AND CONTROL METHOD BASED ON DIRECT-CURRENT BRUSHLESS ELECTRIC TOOL**

(30) Priority: 22.10.2014 CN 201410564900
(71) Applicant: Changzhou Globe Co., Ltd., Jiangsu 213023 (CN)
(72) Inventor: WANG, Dehong, Chang Zhou Jiangsu 213023 (CN); LI, Biao, Chang Zhou Jiangsu 213023 (CN); LIU, Yi, Chang Zhou Jiangsu 213023 (CN)
(74) Representative: Becker Kurig Straus
(86) International application number: PCT/CN2015/076220
(87) International publication number: WO 2016/062028

(57) **Abstract**

A constant-power double-speed control system and method based on DC brushless electric tools which may include an inductance device for collecting information about power supply voltage, working current and motor speed during operation of a motor, a two-gear rotational speed switching module for providing different rotational speed options, a constant-power double-speed control module for reading and judging information sent by the two-gear rotational speed switching module and the inductance device, and a motor output power control module for adjusting the motor's output power according to the judged information of the constant-power double-speed control module. This does not only match load and save energy, but also effectively ensures that the output power of supporting battery system is in a normal range so as to protect the battery system.

## Description

### BACKGROUND OF THE INVENTION

### 1.Technical Field

The present invention relates to the field of DC brushless motor drive system, more especially, to a constant-power double-speed control system and control method based on DC brushless electric tools.

### 2. Description of Related Art

There are many defects in the traditional DC brushless motor drive system in the fields of electric tools and gardening tools using lithium battery pack for power supply. When the traditional DC brushless power tools and gardening tools are in use, the motor speed is in open-loop control. The motor still outputs the full power even when the system load is small. Long-term work under this condition will result in the waste of electric energy. In the event of high capacity, since there is no constant power technology, the motor's output current will increase rapidly, causing heating of the motor and damage to the performance of the supporting lithium battery, which will greatly reduce the motor and battery life, so people need the control system that can better meet their needs.

### BRIEF SUMMARY OF THE INVENTION

The technical problem that the present invention mainly solves is to provide a constant-power double-speed control system and control method based on DC brushless electric tools, which has the advantages of high reliability, energy saving, environmental protection, protection of batteries and so on, and shows a wide range of market prospects in the application and the popularity of DC brushless motor drive system.

To solve the above-mentioned technical problem, the present invention adopts the following technical solution:

A constant-power double-speed control system based on DC brushless electric tools includes a two-gear rotational speed switching module, a constant-power double-speed control module, a motor output power control module, and an inductance device, wherein the inductance device collects information about a power supply voltage, a working current and a motor rotational speed during operation of a motor, the two-gear rotational speed switching module provides different rotational speed options, the constant-power double-speed control module reads and judges information sent by the two-gear rotational speed switching module and the inductance device, and the motor output power control module adjusts an output power of the motor according to the judged information of the constant-power double-speed control module.

In a preferred embodiment, the motor output power control module adjusts the output power of the motor by adjusting a motor drive's switching time, namely, a PWM duty ratio.

In a preferred embodiment, the inductance device includes a voltage sensor, a current sensor, and a motor speed sensor.

A constant-power double-speed control method based on DC brushless electric tools includes the steps of:
A. setting up, by a user, a rotational speed of a motor in a two-gear rotational speed switching module when the motor is running;
B. reading in real time, by a constant-power double-speed control module, the rotational speed of the motor set by the user, setting in real time a target rotational speed of the motor, and setting a maximum operating power;
C. reading in real time a current rotational speed of the motor according to a motor speed sensor;
D. reading a power supply voltage and a working current of the motor, calculating in real time an actual operating power of the motor;
E. comparing the actual operating power of the motor with the set maximum operating power;
F. decreasing a motor drive's PWM duty ratio, that is decreasing an power output of the motor, if the actual operating power of the motor is greater than the maximum operating power, which is an indication that the motor's load is abnormal;
G. reading an actual rotational speed of the motor, and comparing the actual rotational speed with the target rotational speed, if the actual operating power of the motor is less than or equal to the maximum operating power;
H. decreasing the motor drive's PWM duty ratio, that is decreasing the power output of the motor, if the actual rotational speed of the motor is greater than the target rotational speed, which is an indication that the motor's load becomes smaller;
I. increasing the motor drive's PWM duty ratio, that is increasing the power output of the motor, if the actual rotational speed of the motor is smaller than the target rotational speed, which is an indication that the motor's load becomes greater;
J. repeating circulatory steps A-I.

The present invention has the following beneficial effects: it can not only match load and save energy, but also effectively ensure the output power of the supporting battery system is in the normal range so as to protect the battery system.

### BRIEF DESCRIPTION OF THE SEVERAL VIEWS OF THE DRAWINGS

To give a clearer illustration to the technical solution described in the embodiments of the present invention, the drawings that are intended to be used in the description of the embodiments will be briefly introduced. Obviously, the drawings in the following description are merely exemplary embodiments of the present invention. For those skilled in this art, other drawings may be obtained according to these drawings without creative work, where:
FIG. 1 shows the structural view of the constant-power double-speed control system based on DC brushless electric tools according to a preferred embodiment of the present invention;
FIG. 2 shows the workflow chart of the constant-power double-speed control system based on DC brushless electric tools according to the present invention.

### DETAILED DESCRIPTION OF THE INVENTION

The technical solution of embodiment in the present invention will be described hereinafter clearly and entirely, and it is obvious that the embodiments are only a part of but not all the embodiments of the present invention. Any other embodiments obtained by those skilled in this art based on the embodiments of the present invention without contributing creative work are all within the protection scope of the present invention.

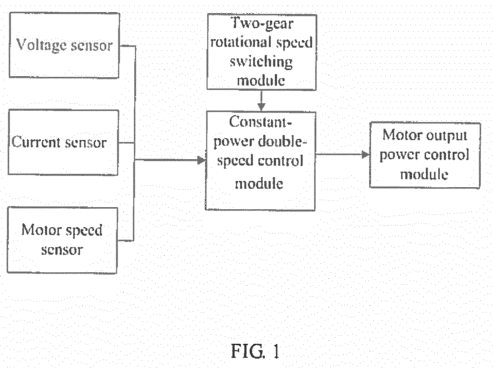

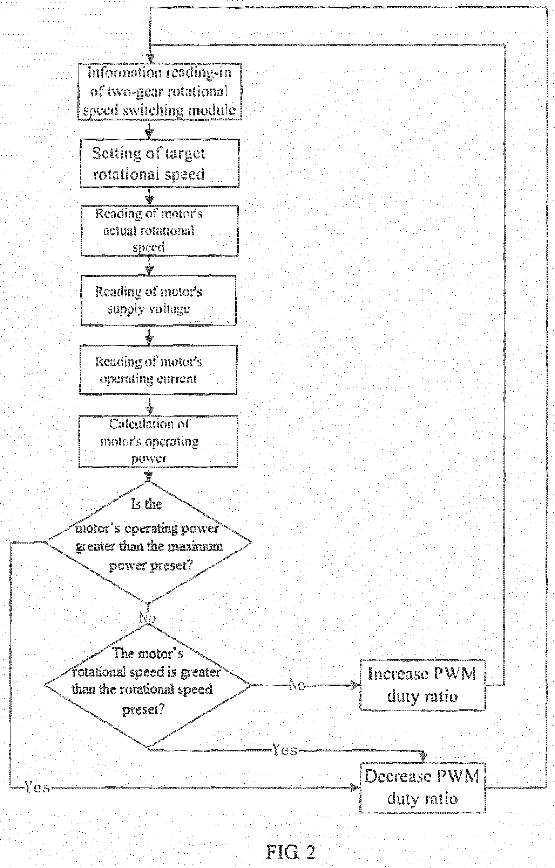

As shown in FIGs. 1-2, the embodiments of the present invention include:

A constant-power double-speed control system based on DC brushless electric tools including: a two-gear rotational speed switching module , a constant-power double-speed control module , a motor output power control module , and an inductance device,,. The inductance device,, collects information about a power supply voltage, a working current and a motor rotational speed during operation of a motor. The two-gear rotational speed switching module provides different rotational speed options. The constant-power double-speed control module reads and judges information sent by the two-gear rotational speed switching module and the inductance device,,. The motor output power control module adjusts an output power of the motor according to the judged information of the constant-power double-speed control module.

The motor output power control module adjusts the output power of the motor by adjusting a motor drive's switching time, namely, a PWM duty ratio.

The inductance device includes a voltage sensor, a current sensor, and a motor speed sensor.

Since the capacity of the battery is limited, the constant-power double-speed control system based on DC brushless electric tools not only considers the actual running effect of the motor drive, but also fully saves the energy of the battery to obtain a longer lifetime. In addition, when the motor encounters a load abnormality, it can reduce the output power of the motor to achieve the purpose of energy saving under the condition of light load, increase the output power of the motor under heavy load and limit the motor output power in case of overloading in order to achieve the purpose of protecting the motor and the battery.

The constant-power double-speed control system based on DC brushless electric tools collects the motor's real-time supply voltage, the motor's operating current and the motor's rotational speed when the brushless motor driver is running, transfers the data to the constant-power double-speed control program, then realizes the motor power control. The two-gear rotational speed switch can provide users with different rotational speed options, and the program identifies gear selection in real time so as to control the motor's rotational speed. The control of the motor's output power is realized by adjusting the motor drive's switching time, namely, PWM duty ratio. Increasing the PWM duty ratio can increase the motor's power output; and, reducing the PWM duty ratio can reduce the motor's power output.

The constant-power double-speed control method based on DC brushless electric tools includes the steps of:
A. setting up, by a user, a rotational speed of a motor in a two-gear rotational speed switching module when the motor is running;
B. reading in real time, by a constant-power double-speed control module, the rotational speed of the motor set by the user, setting in real time a target rotational speed of the motor, and setting a maximum operating power;
C. reading in real time a current rotational speed of the motor according to a motor speed sensor;
D. reading a power supply voltage and a working current of the motor, calculating in real time an actual operating power of the motor;
E. comparing the actual operating power of the motor with the set maximum operating power;
F. decreasing a motor drive's PWM duty ratio, that is decreasing an power output of the motor, if the actual operating power of the motor is greater than the maximum operating power, which is an indication that the motor's load is abnormal;
G. reading an actual rotational speed of the motor, and comparing the actual rotational speed with the target rotational speed, if the actual operating power of the motor is less than or equal to the maximum operating power;
H. decreasing the motor drive's PWM duty ratio, that is decreasing the power output of the motor, if the actual rotational speed of the motor is greater than the target rotational speed, which is an indication that the motor's load becomes smaller;
I. increasing the motor drive's PWM duty ratio, that is increasing the power output of the motor, if the actual rotational speed of the motor is smaller than the target rotational speed, which is an indication that the motor's load becomes greater;
J. repeating circulatory steps A-I.

The beneficial effects of the constant-power double-speed control system and the control method based on DC brushless electric tools according to the present invention are as follows: by adopting the high & low two-gear constant-speed and the constant-power control method, the user can achieve two-gear constant-speed switching freely, thus not only saving energy, but also exhibiting a good adaptability to load under different loads; the constant-speed can increase the external output power when the motor is with load, so as to ensure the output power matches the encryption (if any) match between output power to get a better product experience; in addition, the constant-power control added in the two-gear constant-speed is used for effective control of motor's power output in the abnormal load of the motor, which can effectively protect the motor working within the limited power range, and effectively ensure that the output power of the supporting battery system is in the normal range to achieve the protection to the battery system.

The description above is just an embodiment according to the present invention, which does not constitute restriction to the scope of the present invention. Any equivalent structure or equivalent flow change made based on the Specification, or directly or indirectly applied in the related technical field, shall be covered within the protection scope claimed by the present invention.

## Claims

1. A constant-power double-speed control system based on DC brushless electric tools, **characterized in** comprising: a two-gear rotational speed switching module, a constant-power double-speed control module, a motor output power control module, and an inductance device, wherein the inductance device collects information about a power supply voltage, a working current and a motor rotational speed during operation of a motor, the two-gear rotational speed switching module provides different rotational speed options, the constant-power double-speed control module reads and judges information sent by the two-gear rotational speed switching module and the inductance device, and the motor output power control module adjusts an output power of the motor according to the judged information of the constant-power double-speed control module.

2. The constant-power double-speed control system based on DC brushless electric tools according to claim 1, **characterized in that** the motor output power control module adjusts the output power of the motor by adjusting a motor drive's switching time, namely, a PWM duty ratio.

3. The constant-power double-speed control system based on DC brushless electric tools according to claim 1, **characterized in that** the inductance device comprises a voltage sensor, a current sensor, and a motor speed sensor.

4. A constant-power double-speed control method based on DC brushless electric tools, **characterized in** comprising the steps of:
A. setting up, by a user, a rotational speed of a motor in a two-gear rotational speed switching module when the motor is running;
B. reading in real time, by a constant-power double-speed control module, the rotational speed of the motor set by the user, setting in real time a target rotational speed of the motor, and setting a maximum operating power;
C. reading in real time a current rotational speed of the motor according to a motor speed sensor;
D. reading a power supply voltage and a working current of the motor, calculating in real time an actual operating power of the motor;
E. comparing the actual operating power of the motor with the set maximum operating power;
F. decreasing a motor drive's PWM duty ratio, that is decreasing an power output of the motor, if the actual operating power of the motor is greater than the maximum operating power, which is an indication that the motor's load is abnormal;
G. reading an actual rotational speed of the motor, and comparing the actual rotational speed with the target rotational speed, if the actual operating power of the motor is less than or equal to the maximum operating power;
H. decreasing the motor drive's PWM duty ratio, that is decreasing the power output of the motor, if the actual rotational speed of the motor is greater than the target rotational speed, which is an indication that the motor's load becomes smaller;
I. increasing the motor drive's PWM duty ratio, that is increasing the power output of the motor, if the actual rotational speed of the motor is smaller than the target rotational speed, which is an indication that the motor's load becomes greater;
J. repeating circulatory steps A-I.
